# EUROPEAN PATENT SPECIFICATION

(11) **EP 2 148 429 B1**
(45) Date of publication and mention of the grant of the patent: **30.06.2010**
(21) Application number: 09165695.9
(22) Date of filing: 16.07.2009
(51) Int. Cl.: H02P 9/26, H02M 7/539, H02M 7/5395

(54) **Inverter generator**
Umrichter-Generator
Générateur inverseur

(30) Priority: 25.07.2008 JP 2008191781
(43) Date of publication of application: 27.01.2010
(73) Proprietor: Honda Motor Co., Ltd., Minato-ku Tokyo 107-8556 (JP)
(72) Inventor: Hashimoto, Shoji, Saitama 351-0193 (JP); Muronoi, Kazufumi, Saitama 351-0193 (JP)
(74) Representative: Prechtel, Jörg

(56) References cited:
- JP-A- 4 236 171
- JP-A- 5 103 475
- JP-A- 2002 153 096
- JP-A- 2004 312 922
- JP-A- 2007 020 320

## Description

### BACKGROUND OF THE INVENTION

### Field of the Invention

This invention relates to an inverter generator, particularly to an inverter generator equipped with a generator unit driven by an internal combustion engine, in which a control cycle of PWM is varied.

### Description of the Related Art

One well-known inverter generator once converts the alternating current outputted by an engine-driven generator unit to direct current and then converts the direct current into alternating current of a predetermined frequency (utility frequency) by driving switching elements with a PWM signal generated using a reference sine wave of the desired output voltage waveform and a carrier. An example of such an inverter generator can be found in Japanese Laid-Open Patent Application No. H4(1992)-355672 ('672), which is regarded as being the closest prior art.

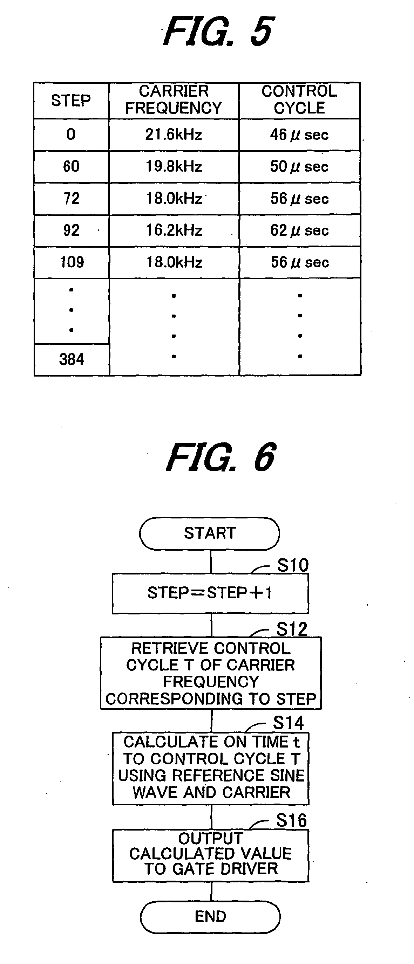

In the conventional inverter generator taught by the reference, a carrier frequency is fixed at a constant value as shown in fig. 6 thereof, and naturally a control cycle determined by a period of the carrier frequency is also fixed at a constant value.

JP2007020320 discloses a PWM inverter device, which is so designed as to output a switching pattern through the comparison of a sinusoidal voltage command with a triangular-wave carrier frequency. The inverter device is provided with carrier frequency varying means for varying the carrier frequency that determines the frequency of a PWM pulse to be within a predetermined frequency range of arbitrary carrier frequency at the center. The carrier frequency varying means varies the carrier frequency periodically or at random, and the range of variation is changed according to the motor current value or the frequency command value.

Furthermore, JP4236171 discloses a method for suppressing an output voltage waveform distortion on an inverter for comparing a sine wave with a triangular wave increased in frequency to control a switching element of the inverter through an arm short-circuit preventing circuit, comprising the steps of forming the triangular wave to a variable frequency triangular wave (b) in which its frequency is reduced near phases 0°, 180° of a comparing sine wave (a) and increased near phases 90°, 270°, and increasing the width of an ON pulse near phases 0°, 180°, thereby preventing vanishment of the ON phase pulse near the phase 0°, 180° by the arm short-circuit preventing circuit.

### SUMMARY OF THE INVENTION

Since the control cycle becomes longer with decreasing carrier frequency, switching loss can be accordingly decreased. On the other hand, voltage ripple grows and harmonic distortion increases. In order to remove the harmonic distortion, a LC filter must have greater performance.

This invention is therefore directed to overcoming the aforesaid problem by providing an inverter generator that conducts conversion to alternating current of a predetermined frequency based on a PWM signal generated using a reference sine wave of the desired output voltage waveform and a carrier, wherein switching loss is decreased, while increase of harmonic distortion components is suppressed.

In order to achieve the object, this invention provides in its first aspect an inverter generator according to claim 1.

In order to achieve the object, this invention provides in its second aspect a method of controlling an inverter generator according to claim 3.

### BRIEF DESCRIPTION OF THE DRAWINGS

The above and other objects and advantages of the invention will be more apparent from the following description and drawings in which:
FIG 1 is a block diagram giving an overview of an inverter generator according to an embodiment of this invention;
FIG. 2 is a waveform diagram for explaining a PWM control by a CPU shown in FIG 1;
FIG. 3 is a waveform diagram showing a control cycle (step) when a carrier frequency is made constant or fixed in the PWM control by the CPU shown in FIG. 1;
FIG 4 is a waveform diagram showing a control cycle (step) when the carrier frequency is varied in the PWM control by the CPU shown in FIG. 1;
FIG 5 is an explanatory view showing table values used in the PWM control by the CPU shown in FIG. 4; and
FIG. 6 is a flowchart showing the operation of the CPU shown in FIG. 4.

### DETAILED DESCRIPTION OF THE PREFERRED EMBODIMENT

An inverter generator according to an embodiment of this invention will now be explained with reference to the attached drawings.

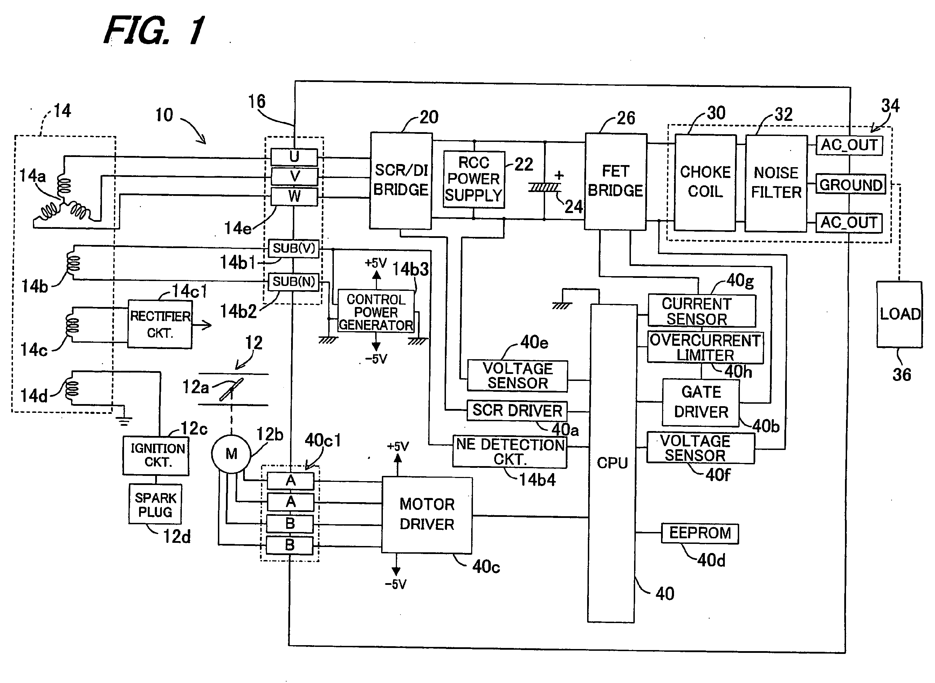

FIG. 1 is a block diagram giving an overview of an inverter generator according to an embodiment of this invention.

The inverter generator is designated by reference numeral 10 in FIG. 1. The generator 10 is equipped with an engine (internal combustion engine) 12 and has a rated output of about 3 kW (AC 100 V, 30 A). The engine 12 is an air-cooled, spark-ignition engine. Its throttle valve 12a is opened and closed by a throttle motor (actuator) 12b constituted as a stepper motor. The engine 12 is started with a recoil starter (not shown).

A circular stator (not shown) is fastened near the cylinder head of the engine 12. The stator is provided with windings that constitute an engine generator unit 14, namely with three-phase (U, V and W) output windings (main windings) 14a and three single-phase windings 14b, 14c and 14d.

A rotor (not shown) that doubles as the flywheel of the engine 12 is installed in the outside of the stator. Permanent magnets (not shown) are attached in the rotor at positions opposite the aforesaid windings 14a, etc., and with their radially oriented polarities reversed alternately.

When the permanent magnets of the rotor surrounding the stator rotate, three-phase (U, V and W phase) alternating current is outputted from (generated by) the three-phase output windings 14a and single-phase alternating current is outputted from the single-phase output windings 14b, 14c and 14d.

The three-phase alternating current outputted from (generated by) the output windings 14a of the generator unit 14 is passed through U, V and W terminals 14e to a control board (printed board) 16 and inputted to a converter 20 mounted thereon. The converter 20 is equipped with bridge-connected three thyristors (SCRs) and three diodes DI. The three-phase alternating current outputted by the generator unit 14 is converted to direct current by controlling the conduction angles of the thyristors.

A ringing choke converter (RCC) power supply (direct current stabilized power supply) 22 is connected to the positive and negative electrode side outputs of the converter 20 and supplies the rectified DC power to the three thyristors as operating power. A smoothing capacitor 24 is connected downstream of the RCC power supply 22 to smooth the direct current outputted from the converter 20.

An inverter 26 is connected downstream of the smoothing capacitor 24. The inverter 26 is equipped with a four-FET bridge circuit (FET: field effect transistor (switching element)). As explained further below, the direct current outputted from the converter 20 is converted to alternating current of a predetermined frequency (50 Hz or 60 Hz utility power frequency) by controlling the conducting (ON-OFF) state of the four FETs.

The output of the inverter 26 is passed through a choke coil 30 composed of an LC filter for harmonic suppression and through a noise filter 32 for noise suppression to be applied to output terminals 34, from which it can be supplied to an electrical load 36 through a connector (not shown) or the like.

The control board 16 is equipped with a CPU (central processing unit) 40 having a 32-bit architecture. The CPU 40 controls the conduction angle of the thyristors of the converter 20 though a thyristor (SCR) driver (drive circuit) 40a, the conducting state of the FETs of the inverter 26 through a gate driver 40b, and the operation of the throttle motor 12b through a motor driver 40c. The CPU 40 is equipped with an EEPROM (nonvolatile memory) 40d.

The output of the first single-phase output winding 14b is sent to the control board 16 through sub-terminals 14b1 and 14b2, where it is inputted to a control power generator 14b3 that generates 5 V operating power for the CPU 40. The output from the sub-terminal 14b1 is sent to an NE detection circuit 14b4, where it is converted to a pulse signal and sent to the CPU 40. The CPU 40 counts the pulses of the output from the NE detection circuit 14b4 to calculate (detect) the speed NE of the engine 12.

The output of the second output winding 14c is sent to a full-wave rectifier circuit 14c1, where it is full-wave rectified to produce operating power for the throttle motor 12b, etc. The output of the third output winding 14d is sent to an ignition circuit 12c of the engine 12 for use as ignition power for a spark plug 12d.

The CPU 40 is connected to first and second voltage sensors 40e and 40f. The first voltage sensor 40e on downstream of the RCC power supply 22 produces an output or signal proportional to the DC voltage output of the converter 20. The second voltage sensor 40f on downstream of the inverter 26 produces an output or signal proportional to the AC voltage output of the inverter 26. The outputs of the first and second voltage sensors 40e and 40f are sent to the CPU 40.

The CPU 40 is further connected to a current sensor 40g. The current sensor 40g produces an output or signal proportional to the current outputted from the inverter 26, i.e., the current passing through the electrical load 36 when the load 36 is connected.

The output of the current sensor 40g is inputted to the CPU 40 and also to an overcurrent limiter 40h constituting a logic circuit (hardware circuit) independent of the CPU 40. When the current detected by the current sensor 40g exceeds the tolerance limit, the overcurrent limiter 40h suspends the output of the gate driver 40b to make the output of the inverter 26 zero temporarily.

The CPU 40 is inputted with the outputs of the first and second voltage sensors 40e, 40f and current sensor 40g and based thereon, PWM-controls the FETs of the inverter 26, while controlling the operation of the throttle motor 12b, thereby further limiting overcurrent.

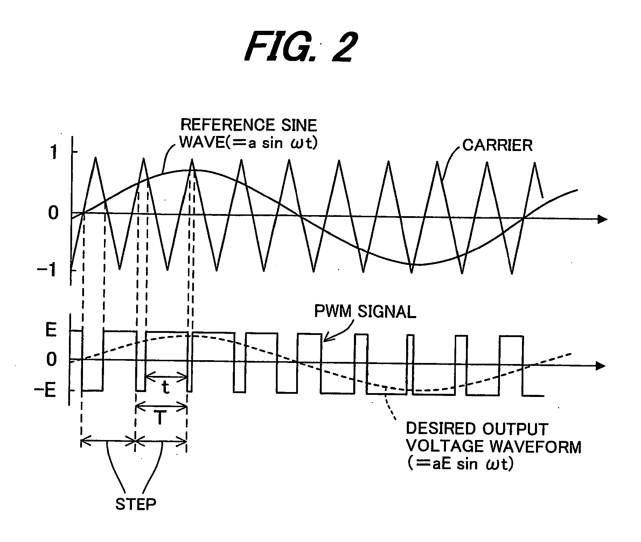

FIG. 2 is a waveform diagram for explaining the PWM control by the CPU 40.

The PWM control of the FETs of the inverter 26 will be explained with reference to FIG. 2. Based on a reference sine wave (signal wave) with respect to the predetermined frequency (50 Hz or 60 Hz utility power frequency) of the desired AC output voltage waveform (lower broken-line wave), the CPU 40 uses a comparator (not shown) to compare it with a carrier (e.g., a 20 kHz carrier wave), produces a PWM signal (PWM waveform), namely a variable duty ratio (= ON time t / period T) pulse train, in accordance with PWM (pulse width modulation), and outputs the signal through the gate driver 40b.

The lower broken-line wave in FIG. 2 indicates the desired output voltage waveform. The period T (step) of the PWM signal (PWM waveform), which is actually much shorter than shown, is enlarged in FIG. 2 for ease of understanding. This will be explained later.

The CPU 40 determines the opening of the throttle valve 12a to establish the desired engine speed calculated based on the AC output determined by the electrical load 36, calculates A phase and B phase output pulses for the throttle stepper motor 12b, and supplies them through the motor driver 40c to the motor 12b from output terminals 40c1, thereby controlling the operation of the motor 12b.

Next, the aforementioned PWM control of the CPU 40 will be explained again.

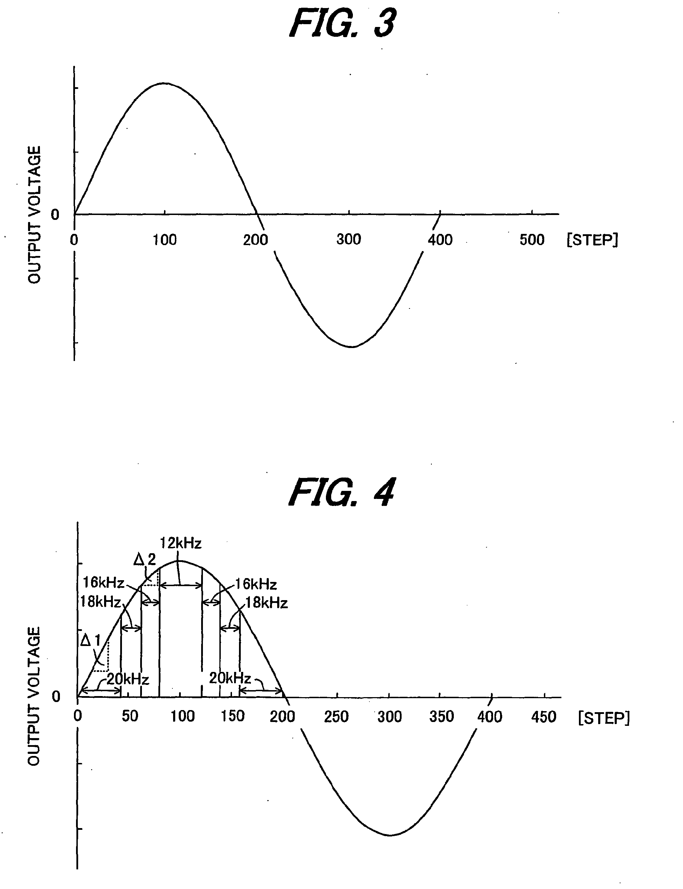

When, for instance, the carrier frequency is made constant or fixed at 20 kHz and the frequency of the desired output voltage waveform is 50 Hz, the control cycle (step) determined by a period of the carrier frequency is also constant or fixed at 50 microseconds, as shown in FIG 3.

Since the control cycle becomes longer with decreasing carrier frequency, switching loss of the FETs can be decreased by an amount corresponding to the elongated cycle. On the contrary, voltage ripple grows and harmonic distortion increases. In order to remove the harmonic distortion, the performance of the choke coil 30 must be enhanced.

This embodiment is therefore configured such that the carrier frequency is varied in accordance with inclination of the reference sine wave, specifically the carrier frequency is decreased as the inclination (slope) of the reference sine wave decreases, as shown in FIG. 4.

More specifically, as shown in FIG 4, since, for example, the inclination (slope) indicated by Δ2 of the reference sine wave is smaller (i.e., gentler) than that indicated by Δ1, the carrier frequency is accordingly determined to be 20 kHz in a range of Δ1, and it is determined to be 16 kHz in a range of Δ2.

As a result, the number of steps, i.e., control cycles, more exactly times of switching controls for driving the FETs can be decreased from 400 to 384, as shown in FIG. 4. The switching loss can be decreased by an amount corresponding to the decreased steps, thereby improving power generation efficiency. Further, owing to the decrease in the number of times of switching controls, heating of the FETs can be suppressed.

Further, carrier frequency is varied in accordance with inclination of the reference sine wave, i.e., it is decreased as decreasing inclination of the reference sine wave. More specifically, when the inclination is small (i.e., gentle), the carrier frequency is decreased to make the control cycle longer (sparser), while, when the inclination is larger (i.e. steeper), the carrier frequency is increased to make the control cycle shorter (denser).

Owing to this configuration, it becomes possible to faithfully generate the output voltage waveform of the reference sine wave to an utmost extent. In addition, since the increase of the harmonic distortion can be suppressed, the performance of the choke coil 30 need not be enhanced.

In the embodiment, as shown in FIG. 5, the carrier frequency is obtained based on the inclination of the reference sine wave in advance and the obtained values are stored as table values together with the control cycles to be retrievable by the number of steps. Thus, the carrier frequency is prepared as table data to be retrievable by a number of control cycles (i.e., the steps).

FIG. 6 is a flowchart showing the operation of the CPU 40 using the table values.

The program begins in S10, in which a value of a counter STEP that counts the number of steps is incremented by 1. The program proceeds to S12, in which the control cycle T of the carrier frequency corresponding to the value of the counter STEP is retrieved, to S14, in which the ON time t to the control cycle T is calculated by comparing the reference sine wave with the carrier, and to S16, in which the calculated value is outputted to the gate driver 40b, whereafter the program is terminated.

As stated above, the embodiment is configured to have an inverter generator (10) (and a method of controlling the generator (10)) having a generator unit (14) that is driven by an internal combustion engine (12) and generates alternating current, a converter (20) that is connected to the generator unit and converts the alternating current to direct current, an inverter (26) that is connected to the converter and converts the direct current to alternating current with switching elements to supply to an electrical load (36), an inverter driver (CPU 40) that drives the switching elements with a PWM signal generated using a reference sine wave of a desired output voltage waveform and a carrier at every control cycle determined by a carrier frequency and makes the alternating current converted in the inverter to the alternating current of a predetermined frequency, **characterized in that**: the inverter driver (CPU 40, S10 to S16) varies the carrier frequency in accordance with inclination of the reference sine wave.

With this, since the carrier frequency is decreased to make the control cycle long, switching loss can be decreased by an amount corresponding to the elongated control cycle, it becomes possible to improve power generation efficiency.

Further, since the carrier frequency is varied in accordance with inclination of the reference sine wave, it becomes possible to faithfully generate the output voltage waveform having the reference sine wave to an utmost extent and to suppress the harmonic distortion.

In the generator, the inverter driver varies the carrier frequency such that the carrier frequency is decreased as decreasing inclination of the reference sine wave. With this, it becomes possible to decrease the carrier frequency to make the control cycle longer when the inclination is small (i.e., gentle) or to increase the carrier frequency to make the control cycle shorter when the inclination is larger (i.e. steeper), thereby enabling to surely decrease the switching loss and to further suppress the harmonic distortion.

Although, in the foregoing, the carrier frequency is varied in accordance with the inclination of the reference sine wave to decrease the number of the control cycles, the number of the control cycles need not be decreased. In that case, while switching loss can not be decreased, the harmonic distortion can be effectively suppressed by decreasing the carrier frequency as decreasing inclination of the reference sine wave.

Although FETs are used as the switching elements of the inverter in the foregoing, this is not a limitation and it is possible to use insulated gate bipolar transistors (IGBTs) or the like instead.

In an inverter generator having an engine generator having a generator unit, a converter that converts generated alternating current to direct current, an inverter that converts the direct current to alternating current with switching elements to supply to an electrical load, an inverter driver that drives the switching elements with a PWM signal generated using a reference sine wave of a desired output voltage waveform and a carrier at every control cycle (step) determined by a carrier frequency and makes the alternating current of a predetermined frequency, the inverter driver varies the carrier frequency in accordance with inclination (indicated by Δ 1, 2 for example) of the reference sine wave, more specifically decreases the carrier frequency as decreasing inclination of the reference sine wave.

## Claims

1. An inverter generator (10) having a generator unit (14) that is driven by an internal combustion engine (12) and generates alternating current, a converter (20) that is connected to the generator unit and converts the alternating current to direct current, an inverter (26) that is connected to the converter and converts the direct current to alternating current with switching elements to supply to an electrical load (36), an inverter driver (40) that drives the switching elements with a PWM signal generated using a reference sine wave of a desired output voltage waveform and a carrier at every control cycle determined by a carrier frequency and makes the alternating current converted in the inverter to the alternating current of a predetermined frequency,
**characterized in that**:
the inverter driver (40, S10 to S16) varies the carrier frequency in accordance with inclination of the reference sine wave,
wherein the inverter driver (40) varies the carrier frequency such that the carrier frequency is decreased as decreasing inclination of the reference sine wave,
which, in particular, means that when the slope of the reference sine wave is small (Δ2), the carrier frequency is decreased to make the control cycle longer, while, when the slope is larger (Δ1), the carrier frequency is increased to make the control cycle shorter.

2. The inverter generator according to claim 1, wherein the carrier frequency is prepared as table data to be retrievable by a number of the control cycles and the inverter driver (40) calculates the carrier frequency to be varied by retrieving the table data (S 10 to S 16).

3. A method of controlling an inverter generator (10) having a generator unit (14) that is driven by an internal combustion engine (12) and generates alternating current, a converter (20) that is connected to the generator unit and converts the alternating current to direct current, an inverter (26) that is connected to the converter and converts the direct current to alternating current with switching elements to supply to an electrical load (36), an inverter driver (40) that drives the switching elements with a PWM signal generated using a reference sine wave of a desired output voltage waveform and a carrier at every control cycle determined by a carrier frequency and makes the alternating current converted in the inverter to the alternating current of a predetermined frequency,
**characterized by** the step of:
varying the carrier frequency in accordance with inclination of the reference sine wave (S10 to S16),
wherein the carrier frequency is decreased as decreasing inclination of the reference sine wave,
which, in particular, means that when the slope of the reference sine wave is small (Δ2), the carrier frequency is decreased to make the control cycle longer, while, when the slope is larger (Δ1), the carrier frequency is increased to make the control cycle shorter.

4. The method according to claim 3 wherein the carrier frequency is prepared as table data to be retrievable by a number of the control cycles and the step of varying the carrier frequency calculates the carrier frequency to be varied by retrieving the table data (S10 to S16).

## Patentansprüche

1. Umrichter-Generator (10) mit:
- einer Generatoreinheit (14), die durch eine Brennkraftmaschine (12) angetrieben ist und Wechselstrom erzeugt,
- einem Wandler (20), der mit der Generatoreinheit verbunden ist und den Wechselstrom in Gleichstrom wandelt,
- einem Umrichter (26), der mit dem Wandler verbunden ist und den Gleichstrom mit Schaltelementen in Wechselstrom umwandelt, um eine elektrische Last (36) zu versorgen,
- einem Umrichter-Treiber (40), der die Schaltelemente mit einem Pulsweitenmodulationssignal antreibt, welches erzeugt wird unter Verwendung einer Referenzsinuswelle einer gewünschten Ausgangsspannungswellenform und eines Trägersignals in jedem Regelungs-/Steuerungs-Zyklus, welcher durch eine Trägerfrequenz bestimmt ist, und der veranlasst, dass der Wechselstrom in dem Umrichter zu dem Wechselstrom einer vorbestimmten Frequenz umgewandelt wird,
**dadurch gekennzeichnet, dass** der Umrichter-Treiber (40, S10 bis S16) die Trägerfrequenz gemäß einer Neigung der Referenzsinuswelle variiert, wobei der Umrichter-Treiber (40) die Trägerfrequenz so variiert, dass die Trägerfrequenz verringert wird, wenn sich die Neigung der Referenzsinuswelle verringert, was insbesondere bedeutet, dass, wenn die Steigung der Referenzsinuswelle klein (Δ2) ist, die Trägerfrequenz verringert wird, um den Regelungs-/Steuerungs-Zyklus länger zu machen, wohingegen, wenn die Steigung größer (Δ1) ist, die Trägerfrequenz erhöht wird, um den Regelungs-/Steuerungs-Zyklus kürzer zu machen.

2. Umrichter-Generator nach Anspruch 1, wobei die Trägerfrequenz als Tabellendaten vorbereitet ist, um durch eine Anzahl von den Regelungs-/Steuerungs-Zyklen abrufbar zu sein, und wobei der Umrichter-Treiber (40) die Trägerfrequenz berechnet, um durch Abrufen der Tabellendaten (S10 bis S16) variiert zu werden.

3. Verfahren zum Regeln/Steuern eines Umrichter-Generators (10) mit:
- einer Generatoreinheit (14), die durch eine Brennkraftmaschine (12) angetrieben ist und Wechselstrom erzeugt,
- einem Wandler (20), der mit der Generatoreinheit verbunden ist und den Wechselstrom in Gleichstrom wandelt,
- einem Umrichter (26), der mit dem Wandler verbunden ist und den Gleichstrom mit Schaltelementen in Wechselstrom umwandelt, um eine elektrische Last (36) zu versorgen,
- einem Umrichter-Treiber (40), der die Schaltelemente mit einem Pulsweitenmodulationssignal antreibt, welches erzeugt wird unter Verwendung einer Referenzsinuswelle einer gewünschten Ausgangsspannungswellenform und eines Trägersignals in jedem Regelungs-/Steuerungs-Zyklus, welcher durch eine Trägerfrequenz bestimmt ist, und der veranlasst, dass der Wechselstrom in dem Umrichter zu dem Wechselstrom einer vorbestimmten Frequenz umgewandelt wird,
**gekennzeichnet durch** den folgenden Schritt:
- Variieren der Trägerfrequenz gemäß einer Neigung der Referenzsinuswelle (S10 bis S16),
wobei die Trägerfrequenz verringert wird, wenn sich die Neigung der Referenzsinuswelle verringert, was insbesondere bedeutet, dass, wenn die Steigung der Referenzsinuswelle klein (Δ2) ist, die Trägerfrequenz verringert wird, um den Regelungs-/Steuerungs-Zyklus länger zu machen, wohingegen, wenn die Steigung größer (Δ1) ist, die Trägerfrequenz erhöht wird, um den Regelungs-/Steuerungs-Zyklus kürzer zu machen.

4. Verfahren nach Anspruch 3, wobei die Trägerfrequenz als Tabellendaten vorbereitet ist, um durch eine Anzahl von den Regelungs-/Steuerungs-Zyklen abrufbar zu sein, und wobei der Schritt des Variierens der Trägerfrequenz die Trägerfrequenz berechnet, um durch Abrufen der Tabellendaten (S10 bis S16) variiert zu werden.

## Revendications

1. Générateur inverseur (10) ayant une unité de générateur (14) laquelle est entraînée par un moteur à combustion interne (12) et génère du courant alternatif, un convertisseur (20) lequel est connecté à l'unité de générateur et convertit le courant alternatif en courant continu, un inverseur (26) lequel est connecté au convertisseur et convertit le courant continu en courant alternatif à l'aide d'éléments de commutation pour alimenter une charge électrique (36), un dispositif d'entraînement d'inverseur (40) lequel entraîne les éléments de commutation avec un signal PWM généré en utilisant une onde sinusoïdale de référence d'une forme d'onde de tension de sortie voulue et une porteuse lors de chaque cycle de commande déterminé par une fréquence porteuse et transforme le courant alternatif converti dans l'inverseur en courant alternatif d'une fréquence prédéterminée,
**caractérisé en ce que** :
le dispositif d'entraînement d'inverseur (40, S10 à S16) fait varier la fréquence porteuse conformément à l'inclinaison de l'onde sinusoïdale de référence,
dans lequel le dispositif d'entraînement d'inverseur (40) fait varier la fréquence porteuse de sorte que la fréquence porteuse diminue lors de la diminution de l'inclinaison de l'onde sinusoïdale de référence,
ce qui, en particulier, signifie que lorsque la pente de l'onde sinusoïdale de référence est faible (Δ2), la fréquence porteuse diminue pour allonger le cycle de commande, alors que, lorsque la pente est plus forte (Δ1), la fréquence porteuse augmente pour raccourcir le cycle de commande.

2. Générateur inverseur selon la revendication 1, dans lequel la fréquence porteuse est préparée sous forme de données de tableau pouvant être récupérées par un certain nombre des cycles de commande et le dispositif d'entraînement d'inverseur (40) calcule la fréquence porteuse à faire varier en récupérant les données de tableau (S10 à S16).

3. Procédé de commande d'un générateur inverseur (10) ayant une unité de générateur (14) laquelle est entraînée par un moteur à combustion interne (12) et génère du courant alternatif, un convertisseur (20) lequel est connecté à l'unité de générateur et convertit le courant alternatif en courant continu, un inverseur (26) lequel est connecté au convertisseur et convertit le courant continu en courant alternatif à l'aide d'éléments de commutation pour alimenter une charge électrique (36), un dispositif d'entraînement d'inverseur (40) lequel entraîne les éléments de commutation avec un signal PWM généré en utilisant une onde sinusoïdale de référence d'une forme d'onde de tension de sortie voulue et une porteuse lors de chaque cycle de commande déterminé par une fréquence porteuse et transforme le courant alternatif converti dans l'inverseur en courant alternatif d'une fréquence prédéterminée,
**caractérisé par** l'étape consistant à :
faire varier la fréquence porteuse conformément à l'inclinaison de l'onde sinusoïdale de référence (S10 à S16),
dans lequel la fréquence porteuse diminue lors de la diminution de l'inclinaison de l'onde sinusoïdale de référence,
ce qui, en particulier, signifie que lorsque la pente de l'onde sinusoïdale de référence est faible (Δ2), la fréquence porteuse diminue pour allonger le cycle de commande, alors que, lorsque la pente est plus forte (Δ1), la fréquence porteuse augmente pour raccourcir le cycle de commande.

4. Procédé selon la revendication 3, dans lequel la fréquence porteuse est préparée sous forme de données de tableau pouvant être récupérées par un certain nombre des cycles de commande et l'étape consistant à faire varier la fréquence porteuse calcule la fréquence porteuse à faire varier en récupérant les données de tableau (S10 à S16).
